# EUROPEAN PATENT APPLICATION

(11) **EP 2 110 860 A1**
(43) Date of publication of application: **21.10.2009**
(21) Application number: 08154729.1
(22) Date of filing: 17.04.2008
(51) Int. Cl.: H01L 31/042

(54) **Wallboard and manufacturing method**

(71) Applicant: National Taiwan University of Science and Technology, 106 Taipei City (TW)
(72) Inventor: Young, Chin-Huai Technology Transfer Center, Da-an District, Taipei City 106 (TW)
(74) Representative: Charrier, Rapp & Liebau

(57) **Abstract**

A wallboard (100) construction method is provided and comprises the following steps. First, a prefabricated wallboard (100) and a wall are provided, the prefabricated wallboard comprising a substrate (110), a frame (120) and a solar energy board (130), wherein the frame is disposed on the substrate, and the solar energy board is fixed in the frame. Finally, the prefabricated wallboard is disposed on the wall.

## Description

### BACKGROUND of the invention

### Field of the Invention

The invention relates to a wallboard construction method, and more particularly to a method for mounting a solar energy board on a wall by a prefabricated wallboard.

### Description of the Related Art

Conventional photoelectric solar energy boards utilize monocrystalline silicon solar cells or amorphous silicon solar cells to transform solar energy. However, monocrystalline silicon solar cells or amorphous silicon solar cells have increased cost, and usually applied in supplying electricity to portable electronic devices.

In buildings, solar energy is conventionally used for heating water to replace the gas operated hot water heater, wherein the solar energy boards are disposed on roofs of buildings after building construction has been completed.

### Brief Summary of THE Invention

A detailed description is given in the following embodiments with reference to the accompanying drawings.

The invention provides a wallboard construction method comprising the following steps. First, a prefabricated wallboard and a wall are provided, wherein the prefabricated wallboard comprising a substrate, a frame and a solar energy board, and the frame is disposed on the substrate, and the solar energy board is fixed in the frame. Finally, the prefabricated wallboard is disposed on the wall.

In the invention, the solar energy boards are pre-mounted in the wallboard. Therefore, during the construction process, the solar energy boards can be directly disposed on the outer walls of the building via the wallboard. Utilizing the invention, the solar energy boards can be disposed on the outer walls of the building quickly and easily.

### BRIEF DESCRIPTION OF the DRAWINGS

The invention can be more fully understood by reading the subsequent detailed description and examples with references made to the accompanying drawings, wherein:

Fig. 1a is a front view of a wallboard of the invention;

Fig. 1b is a side view of the wallboard of the invention;

Fig. 2 shows a wallboard manufacturing process of the invention;

Fig. 3 shows the wallboard of the invention disposed on an outer wall of a building;

Fig. 4 shows solar energy boards in the invention providing electricity to household appliances in a building; and

Fig. 5 shows a modified embodiment of the invention.

### Detailed Description of the Invention

The following description is of the best-contemplated mode of carrying out the invention. This description is made for the purpose of illustrating the general principles of the invention and should not be taken in a limiting sense. The scope of the invention is best determined by reference to the appended claims.

The invention disposes solar energy boards on outer walls of a building to provide electricity thereby. Particularly, the invention provides a method for mounting solar energy boards on outer walls of the building during the construction process.

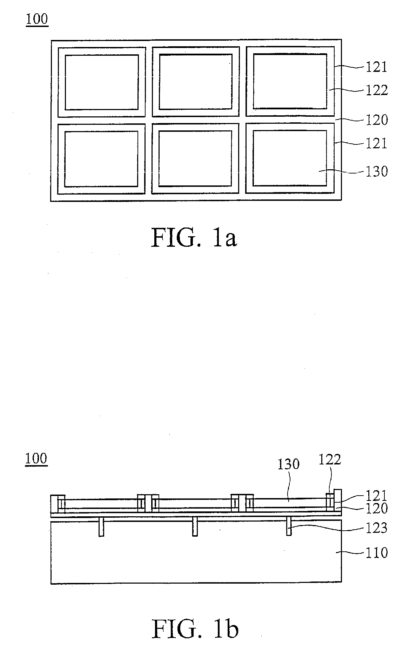

Figs. 1a and 1b show a prefabricated wallboard 100 of the invention comprising a substrate 110, a frame 120 and a plurality of solar energy boards 130. The frame 120 is disposed on the substrate 110. The solar energy boards 130 are fixed in the frame 120.

With reference to Fig. 1a, the frame 120 comprises a plurality of partitions 121, and the solar energy boards 130 are fixed in the partitions 121. When one of the solar energy boards is deteriorated or damaged, the damaged solar energy board can be directly disassembled from the corresponding partition to be replaced.

With reference to Fig. 1b, the frame 120 further comprises fixers 122 and anchors 123. The fixers 122 are disposed in the frame 120 abutting the solar energy boards 130 for fixing the solar energy boards 130 in the frame 120, absorbing kinetic energy applied on the solar energy boards 130 and increasing stabilization thereof. The anchors 123 are embedded in the substrate 110 to fix the frame 120 on the substrate 110. The fixers 122 can be of rubber. The substrate 110 can be concrete slab. In a modified embodiment, reinforcing elements (for example, steel plates) can be disposed in the substrate 110. The solar energy board 130 can comprise a dye-sensitized solar cell, and a photo catalysis material can be coated on a surface thereof.

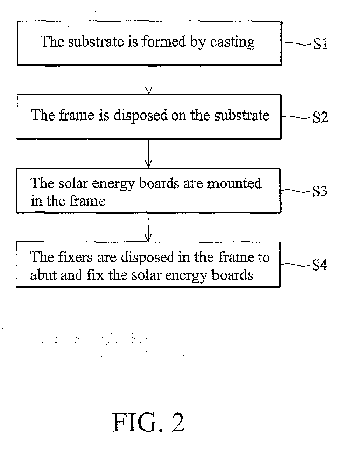

Fig. 2 shows a wallboard manufacturing process of the invention. First, the substrate is formed by casting (S1). In a modified embodiment, reinforcing elements can be disposed in the substrate during casting. Then, the frame is disposed on the substrate (S2). Next, the solar energy boards are mounted in the frame (S3). Finally, the fixers are disposed in the frame to abut and fix the solar energy boards (S4). The wallboard manufacturing process above can be realized by an automated process.

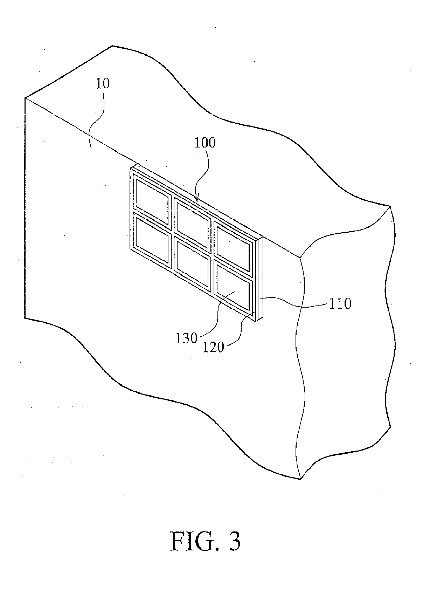

With reference to Fig. 3, during the construction process, the prefabricated wallboard 100 can be directly disposed on a wall 10 of a building.

In the invention, the solar energy boards are pre-mounted in the wallboard. Therefore, during the construction process, the solar energy boards can be directly disposed on the outer walls of the building via the wallboard. Utilizing the invention, the solar energy boards can be disposed on the outer walls of the building quickly and easily.

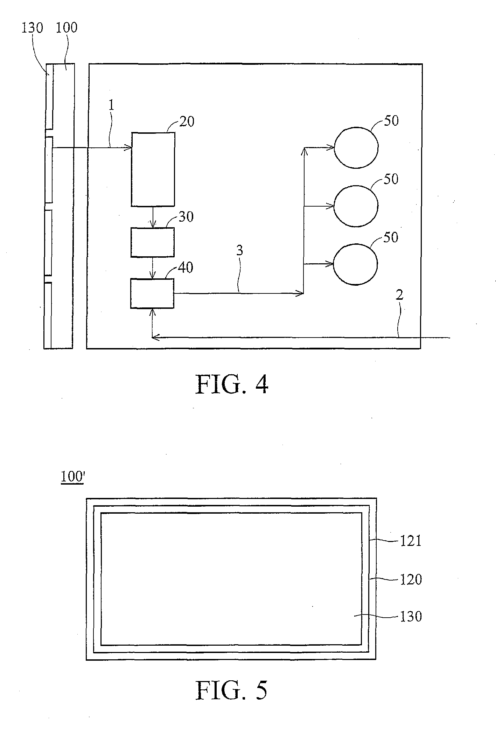

In the invention, the solar energy board provides electricity to the building. With reference to Fig. 4, the solar energy boards 130 provide a current 1. The current 1 enters a battery 20, and enters a direct-current-alternating-current converter 30. Finally, the first current 1 enters a converging device 40, and the converging device 40 provides a household current 3 to household appliances 50. When the first current 1 is insufficient, a second current (city current) 2 enters the converging device 40 to be the household current 3.

Fig. 5 shows a prefabricated wallboard 100' of a modified embodiment of the invention, which utilizes a single solar energy board 130.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A wallboard construction method, comprising:
providing a prefabricated wallboard and a wall, wherein the prefabricated wallboard comprising a substrate, a frame and a solar energy board, and the frame is disposed on the substrate, and the solar energy board is fixed in the frame; and
disposing the prefabricated wallboard on the wall.

2. The wallboard construction method as claimed in claim 1, wherein the solar energy board comprises a dye-sensitized solar cell.

3. The wallboard construction method as claimed in claim 1, further comprising coating a photo catalysis material on the solar energy board.

4. The wallboard construction method as claimed in claim 1, wherein the prefabricated wallboard further comprises a fixer, and the fixer is disposed in the frame abutting the solar energy board to fix the solar energy board in the frame.

5. The wallboard construction method as claimed in claim 1, further comprising:
forming the prefabricated wallboard by an automated process.

6. A wallboard construction method, comprising:
providing a prefabricated wallboard and a wall, wherein the prefabricated wallboard comprising a substrate, a frame and a plurality of solar energy boards, and the frame is disposed on the substrate, and the solar energy boards are fixed in the frame; and
disposing the prefabricated wallboard on the wall.

7. A prefabricated wallboard, comprising:
a substrate;
a frame, disposed on the substrate, wherein the frame comprises a plurality of partitions; and a plurality of solar energy boards,
correspondingly disposed in the partitions.

8. The prefabricated wallboard as claimed in claim 7, further comprising a plurality of fixers, and the fixers are disposed in the frame abutting the solar energy boards to fix the solar energy boards in the frame.

9. A wallboard manufacturing method, comprising:
forming a substrate by casting;
disposing a frame on the substrate;
disposing a solar energy board in the frame; and disposing a fixer in the frame to abut and fix the solar energy board.

10. The wallboard manufacturing method as claimed in claim 9, further comprising coating a photo catalysis material on the solar energy board.
